(19)

Europäisches
Patentamt
European
Patent Office
Office européen
des brevets

(11) **EP 1 903 493 A1**

(12) **EUROPEAN PATENT APPLICATION**
published in accordance with Art. 153(4) EPC

(43) Date of publication:
   **26.03.2008 Bulletin 2008/13**

(51) Int Cl.:
   ***G06Q 40/00*** (2006.01)   ***G06Q 10/00*** (2006.01)
   ***G06Q 90/00*** (2006.01)

(21) Application number: **06766751.9**

(22) Date of filing: **15.06.2006**

(86) International application number:
   **PCT/JP2006/312017**

(87) International publication number:
   **WO 2006/134998 (21.12.2006 Gazette 2006/51)**

(84) Designated Contracting States:
   **DE GB**

(30) Priority: **16.06.2005 JP 2005176854**

(71) Applicant: **Yahoo Japan Corporation**
   **Minato-ku,**
   **Tokyo 106-6182 (JP)**

(72) Inventors:
   • **BRODY, Julian,**
     **c/o Yahoo Japan Corporation**
     **Minato-ku, Tokyo 1066182 (JP)**
   • **BRODY, Dorje**
     **London SW72AZ (GB)**

(74) Representative: **Müller-Boré & Partner**
   **Patentanwälte**
   **Grafinger Strasse 2**
   **81671 München (DE)**

(54) **COMPUTER PROCESSING METHOD, AND PROGRAM**

(57) There is provided a computer calculation processing method for determining risk-neutral probability distribution with the use of a model-independent maximum entropy method. There are provided an input device (101) into which arbitrarily set information is inputted, a market (102) which is the source of various market information, a calculator (103) which receives various inputs, performs the calculation processing of the present invention and issues an output instruction, an interface (104) which collects information from the market and inputs it to the calculator (103), a storage device (105) which stores the program of the present invention and various data generated during the calculation processing, and a display device (10). Output of a result of the calculation processing can be stored in the storage device (105) in addition to the display device (106), printed on a printing device or transmitted via a communication line.

FIG.1

EP 1 903 493 A1

**Description**

TECHNICAL FIELD

The present invention relates to a computer calculation processing method and program, and more particularly to a computer calculation processing method and program for determining risk-neutral probability distribution with the use of a maximum entropy method.

BACKGROUND ART

The background art of the computer calculation processing for determining risk-neutral probability distribution with the use of a maximum entropy method, according to the present invention, will be described below.

(Black-Scholes model)

With the use of a model in accordance with the geometric Brownian motion advocated by an economist, Paul Samuelson, a concept that a price of a derivative exists which is determined by a risk-neutral probability without depending on the trend of the underlying asset price was introduced by Fischer Black and Myron Scholes in 1973. By specifically showing that the price of a derivative product (a derivative) the payment amount of which depends on the future stock price does not depend on the drift of the stock price (motion indicating the basic directionality of the motion of the price of the underlying asset), with the use of a model, they changed the conventional way of thinking completely (for example, see Patent Document 1).
Specifically, Black and Scholes used the following stochastic differential equation as a model indicating the temporal development of a stock price $S_t$:
$$\frac{dS_t}{S_t} = r\,dt + \sigma\,dW_t^*$$

where $W_t$* denotes standard Brownian motion in risk-neutral probability distribution, and r denotes an interest rate considered to be constant, and σ denotes the volatility of the stock price.
According to the Black-Scholes model, the price of a European call option, for example, can be determined as the following simple expected value dependent on the interest rate r, the volatility σ, an exercise price K and maturity T.
$$C = e^{-rT} \mathrm{E}\left[\left(S_T - K\right)^+\right]$$

where E denotes an expected value under the risk-neutral probability measure.
As described above, from the viewpoint of the concept of the risk-neutral probability, the Black-Scholes model can be said to be a model in which a random component in a changed portion relative to the current value of a stock price is described by the Brownian motion. That is, it is a model in which a value obtained by dividing a random component in a changed portion of a stock price during a slight time period by the stock price itself is in proportion to a changed portion of the Brownian motion. The amount of fluctuation of the stock price during the slight time can be separated into a predictable conclusive component and an unpredictable random component. The above-described random component means the unpredictable component in the amount of fluctuation of the stock price during the slight time. Here, the predictable component is a portion of increase in the stock price determined by the interest rate (that is, the market interest rate of the amount equal to the current stock price), and the unpredictable component is in proportion to the changed portion of the Brownian motion in the risk-neutral probability distribution, and the proportionality constant is called the "volatility" of the stock and shows a degree of fluctuation of the stock price.
Therefore, it is three variables of the current value of the stock price, the interest rate, and the volatility that must be specified in the Black-Scholes stock price model. In the procedure for actually determining the price of an option, a volatility variable is fixed first, and then, such a probability system that an expected value of a future stock price is equal to the current stock price (that is, risk-neutral probability distribution) is determined in accordance with the model. Next, an expected value of the payment amount at the maturity of the option contract is calculated with the use of the determined probability distribution.

The result is the so-called "Black-Scholes option evaluation formula". Therefore, this formula also depends on the maturity of the option contract and the exercise price in addition to the current stock price, the interest rate and the volatility. That is, the price of an option is determined by specifying the five variables. Among these five variables, the maturity and the exercise price of an option are as specified in a contract between a customer and a product provider, and the values of the interest rate and the current stock price can be checked in the market.

(Volatility)

In comparison, only the volatility is a quantity which cannot be observed. This is because the volatility indicates the magnitude of the stock price fluctuation at the present point of time. Though the past volatility can be estimated by examining stock price data, it is impossible to accurately determine the current and future volatility. However, it is necessary to determine some volatility value to use the Black-Scholes evaluation formula.

As a method for setting this variable, a method called an implied volatility as shown below is commonly used. That is, by specifying the variables such as the maturity and the exercise price in the Black-Scholes evaluation formula and examining the quotation of the option price in a similar transaction actually performed in the market, backward counting of a volatility value corresponding the market price of an option is performed. This method is called the implied volatility because a volatility which is "implied" by the option price already existing in the market is used on the basis of examination of the market.

Though such an implied volatility is used to use the Black-Scholes evaluation formula, this is accompanied by some problems. If the implied volatility is determined with the use of the market price of an option with the same maturity and a different exercise price, a different value is obtained. Furthermore, in the case of performing backward counting of the implied volatility with the use of the market price of an option with a different maturity also, a different value is obtained.

One reason is that the price of the option actually transacted in the market is not determined by the Black-Scholes model. However, a more basic problem is that the constant volatility assumed in the Black-Scholes model does not describe actual stock price fluctuation.

Accordingly, when an implied volatility which is obtained by using the Black-Scholes formula and data of option prices corresponding to various exercise prices in transactions performed in the market is determined for a particular maturity (that is, when the implied volatility is determined as a function of the exercise price), a curve called smile, which resembles a quadratic function, is generally obtained.

Next, when this operation is performed for each maturity, it is possible to determine the implied volatility as a quadratic function of the exercise price and the maturity. A curved surface obtained as a result is called a "volatility surface".

Actually, when a trader quotes the price of an option, he generally uses an implied volatility value on the volatility surface. By substituting the value in the Black-Scholes formula, an actual price is determined.

(Application of Black-Scholes model)

The most important point in the Black-Scholes formula is that an arbitrage opportunity is not given. Furthermore, according to the Black-Scholes model, there is an advantage that hedge means which eliminates risk is specifically determined. On the other hand, the Black-Scholes model, in which commission is not considered and the volatility is constant, is not a model which correctly describes the actual market, and therefore, investment banks and hedge funds in the world have extended the Black-Scholes model to evaluate derivatives.

A great number of extended Black-Scholes models exists. As a method for numerically introducing such a model, there is a method of extending the model into a binomial tree model or extending the binomial tree model to a volatility model (for example, see Non-patent Document 2).
There are a lot of enterprises which provide derivative evaluation devices for investment banks, hedge funds, finance-related research institutes and the like in the world, using such an evaluation method. Algorithmic Trading in Canada and The MathWorks (MATLAB) in U.S. are representative enterprises. All of these evaluation devices mainly use the Black-Scholes model, an extended Black-Scholes model, a binomial tree model, or a volatility model obtained by extending the model, and depend on a model which indicates temporal development of an underlying asset.

Information to be inputted at the time of calculation includes an exercise price and maturity as information set arbitrarily, and the price of an underlying asset, the yield of the underlying asset, a short-term rate of interest (a risk-free interest rate) and a volatility (an expected fluctuation rate) as information obtained from the market. A model dependent on these variables is specifically modified with the use of the price of a vanilla option transacted in the market. The modification of the model is called "calibration". Accordingly, it is possible to set the price of another exotic option with the use of a model calibrated with the price of a vanilla option, by evaluation dependent on a model indicating temporal development of an underlying asset.

(Problems of the model indicating the temporal development of an underlying asset)

However, the probability measure which does not give an arbitrage opportunity depends on a model describing fluctuation (temporal development) of an underlying asset such as stock, and it is originally impossible to correctly indicate the actual stock price by a model. That is, even if sufficient calibration is performed, the price of an option clearly depends on selection of a model.

Options actually transacted in the market are mainly those which are called "factor model" and specified by some variables. Therefore, if the number of the variables to specify a model is increased, it is possible to accurately perform calibration of any model at the price of a vanilla option product actually transacted in the market. Therefore, in the model-dependent calibration method, there is a risk that a possibility of the calibration being over-fit to given data is high.

In the case where the calibration is over-fit, there is a high possibility of putting a wrong price on a vanilla option product, for example, in the case where actual market transaction data cannot be obtained or in the case of a transaction at an exercise price which has not been used yet in a transaction in the market. There is a problem that, if a wrong price is put on an option product in the market, the option product immediately falls a prey to other rivals.

In summary, the model indicating the temporal development of an underlying asset, such as the Black-Scholes model, is not a model which describes an actual price fluctuation, at all, and as a result, it is not possible to avoid a loss related to a risk attributable to a model.

Actually, as for some of the models which are generally appreciated in the market, almost perfect calibration of the smile (a curve indicating implied volatility as a function of an exercise price) of a vanilla product is possible. However, Schoutens and others evaluate an exotic option using them, and show a problem that there is a big difference between the prices, that is, there is a possibility of over-fit (for example, see Non-patent Document 2).

Accordingly, since it is important to determine a risk-neutral probability required for evaluation of an option by model-independent means in order to reduce the risk, a method using the model-independent Shannon's entropy is proposed (for example, see Non-patent Document 3).

However, though it is known that, in the proposed method using the Shanon's entropy, the distribution obtained as a result is in accordance with index distribution, there is a problem that the method is not suitable for the actual market because the tail distribution of the actual market price is generally in accordance with the power law.

Accordingly, it is desired to find a calibration method which does not depend on a model indicating the temporal development of an underlying asset and which enables the power law for the tail of distribution to be obtained.
In the case of a conventional nonparametric method, it is not possible to determine a hedge strategy from risk-neutral distribution, and it is difficult to actually realize a profit if a hedge strategy is not given. However, by paying attention to time-reversed economy, this problem can be solved.

Furthermore, as described above, the derivative evaluation devices which have been conventionally provided are exclusively for so-called specialists, such as investment banks, hedge funds and finance-related institutes, because a part of the option evaluation theory thereof is difficult to understand. Therefore, optional derivative products have been unfamiliar to general individual investors. For example, a stock option, one of optional derivatives, is attractive both from the viewpoint of investment and from the viewpoint of insurance, and there is a problem that, though such a derivative product is promising as a financial product, it is difficult to increase the number of end investors.

Furthermore, the evaluation of a stock option is intended for limited investors, and general individual investors with motivation to invest do not have means for knowing whether the price of an option given by the evaluation method dependent on a model indicating the temporal development of an underlying asset includes an arbitrage opportunity or whether the given option price is rational.

The present invention has been made in view of such problems, and its object is to provide a computer calculation processing method for determining risk-neutral probability distribution with the use of a model-independent maximum entropy method.

In addition, another object is to provide a computer calculation processing method for determining risk-neutral probability distribution in which the tail distribution is in accordance with the power law to obtain a power-law tail distribution which the stock price fluctuation in the actual market is in accordance with.

Furthermore, another object is to provide a computer calculation processing method for obtaining the gamma of an option by risk-neutral probability distribution in regressing economy on the basis of the time-reversal symmetry of a solution obtained with the use of the maximum entropy method.

Furthermore, another object is to provide a computer calculation processing method for obtaining a hedge strategy delta by integrating the gamma obtained as above.

Furthermore, another object is to provide a computer calculation processing method for obtaining a tail distribution variable $\mu$ by the power coefficient of the risk-neutral probability distribution obtained as above.

Furthermore, another object is to provide a computer calculation processing method which enables even a general investor to easily know a derivative evaluation device or system capable of evaluating a derivative product without necessity of special knowledge.

Non-patent Document 1: "Journal of Political Economy, 81, 637-659" (Black & Scholes, 1973)

Non-patent Document 2: "A Perfect Calibrations! Now What?, Technical Report, Katholike Universiteit of Leuven" (W. Schoutens, E. Simons, J. Tistaert, 2003)

Non-patent Document 3: "The maximum entropy distribution of an asset inferred from option prices, Journal of Financial and Quantitative Analysis, 31, pp. 143-159" (P. W. Buchen, M. Kelly, 1996)

DISCLOSURE OF THE INVENTION

In order to achieve the above objects, the invention according to claim 1 of this application is a computer calculation processing method for acquiring risk-neutral probability distribution by a nonparametric method on the basis of multiple constraint condition expressions having predetermined information as coefficients, by a program of a computer, the method being characterized in comprising: a simultaneous equations generation step of reading a predetermined risk-neutral probability distribution expression maximizing the entropy which is stored in storage means in advance, from the storage means, substituting the predetermined risk-neutral probability distribution expression into the multiple constraint condition expressions to generate simultaneous equations including Lagrange undetermined multipliers, and storing the simultaneous equations in the storage means; a Lagrange multipliers calculation step of reading the generated simultaneous equations from the storage means, determining the solution of the simultaneous equations by numeric calculation means, deciding each of the Lagrange undetermined multipliers, and storing each of the Lagrange undetermined multipliers in the storage section as a Lagrange multiplier; and an output step of generating probability distribution by the calculation means on the basis of the predetermined risk-neutral probability distribution expression decided by the Lagrange multipliers read from the storage section and outputting the probability distribution by output means.

The invention according to claim 2 is the computer calculation processing method according to claim 1, characterized in that: the risk-neutral probability distribution expression is a predetermined risk-neutral probability distribution expression maximizing the Rennie's entropy, and the multiple constraint condition expressions are a probability distribution normalization condition expression, an input data constraint condition expression and a risk-neutral constraint condition expression; in the simultaneous equations generation step, the simultaneous equations are generated by setting a predetermined value for a power coefficient in the risk-neutral probability distribution expression; the method further comprises a power coefficient decision step of setting multiple values for the power coefficient in the predetermined risk-neutral probability distribution expression decided by the Lagrange multipliers read from the storage section to generate multiple probability distribution expressions, by the calculation means, and setting the predetermined value which maximizes the smoothness degree of the probability distribution among the generated multiple probability distribution expressions, as the power coefficient of the probability distribution expression to be determined.

The invention according to claim 3 is the computer calculation processing method according to claim 2, characterized in that, in the power coefficient calculation step, the difference between the gradient values on the right and left of each predetermined point in the generated probability distribution is determined, and such a power coefficient as minimizes the total of the absolute values of the gradient value differences is set as the power coefficient which maximizes the smoothness degree.

The invention according to claim 4 is the computer calculation processing method according to claim 2 or 3, characterized in that the predetermined risk-neutral probability distribution expression p(x) indicates risk-neutral probability distribution for the price of an underlying asset at maturity with the use of the price of a high-liquidity derivative product.

The invention according to claim 5 is the computer calculation processing method according to claim 4, characterized in that the predetermined risk-neutral probability distribution expression p(x) is:

$$p(x) = (\lambda + \beta x + \sum_{i=1}^{n} \nu_i D_i(x))^{\frac{1}{\alpha-1}}$$

wherein $D_i(x)$ denotes a payment function corresponding to a derivative, $\lambda$, $\beta$ and $\nu_i$ denote the Lagrange undetermined multipliers, n denotes the number of constraint conditions, and $\alpha$ denotes the power coefficient.

The invention according to claim 6 is the computer calculation processing method according to claim 5, characterized in that:

the probability distribution normalization condition expression is:

$$\int_0^\infty p(x)dx = 1 \quad ;$$

the input data constraint condition expression is:
$$\int_0^\infty D_i(x)p(x)dx = e^{\int_0^T r(t)dt} C_i \quad ;$$

and
the risk-neutral constraint condition expression is:
$$\int_0^\infty xp(x)dx = e^{\int_0^T r(t)dt} S_0 \quad ;$$

wherein $C_i$, T, $S_0$ and r(t), which are the predetermined information, denote the price of the derivative, the maturity of the derivative, the current asset value and the interest rate at time t, respectively, and $D_i(x)$ generally denotes a payment function corresponding to the derivative.
The invention according to claim 7 is the computer calculation processing method according to claim 2 or 3, characterized in that, as for a call option, the predetermined risk-neutral probability distribution expression p(x) indicates risk-neutral probability distribution for the price of an underlying asset at maturity with the use of the price of a high-liquidity call option.
The invention according to claim 8 is the computer calculation processing method according to claim 7, characterized in that the predetermined risk-neutral probability distribution expression p(x) is:
$$p(x) = (\lambda + \beta x + \sum_{i=1}^n \nu_i (x - K_i)^+)^{\frac{1}{\alpha-1}}$$

wherein $(x-K_i)^+$ denotes a payment function of the call option, $\lambda$, $\beta$ and $\nu_i$ denote the Lagrange undetermined multipliers, $K_i$ denotes an exercise price, n denotes the number of constraint conditions, and $\alpha$ denotes the power coefficient.
The invention according to claim 9 is the computer calculation processing method according to claim 8, characterized in that:

the probability distribution normalization condition expression is:

$$\int_0^\infty p(x)dx = 1 \quad ;$$

the input data constraint condition expression is:
$$\int_0^\infty (x - K_i)^+ p(x)dx = e^{\int_0^T r(t)dt} C_i$$ ;

and

the risk-neutral constraint condition expression is:

$$\int_0^\infty xp(x)dx = e^{\int_0^T r(t)dt} S_0$$ ;

wherein $(x-K_i)^+$ denotes a payment function of the call option, $C_i$, T, $S_0$ and r(t), which are the predetermined information, denote the price of the call option, the maturity of the call option, the current asset value and the interest rate at time t, respectively.

The invention according to claim 10 is the computer calculation processing method according to claim 2 or 3, characterized in that, as for a digital option, the predetermined risk-neutral probability distribution expression p(x) indicates risk-neutral probability distribution for the price of an underlying asset at maturity with the use of the price of a high-liquidity digital option product.

The invention according to claim 11 is the computer calculation processing method according to claim 10, characterized in that the predetermined risk-neutral probability distribution expression p(x) is:

$$p(x) = (\lambda + \beta x + \sum_{i=1}^n v_i \Theta(x - K_i))^{\frac{1}{\alpha - 1}}$$

wherein $\Theta$ denotes a Heaviside function, $\Theta(x-K_i)$ denotes a payment function of the digital option, $\lambda$, $\beta$ and $v_i$ denote the Lagrange undetermined multipliers, $K_i$ denotes an exercise price, n denotes the number of constraint conditions, and $\alpha$ denotes the power coefficient.

The invention according to claim 12 is the computer calculation processing method according to claim 11, characterized in that:

the probability distribution normalization condition expression is:

$$\int_0^\infty p(x)dx = 1$$ ;

the input data constraint condition expression is:

$$\int_0^\infty \Theta(x - K_i)p(x)dx = e^{\int_0^T r(t)dt} C_i$$ ;

and

the risk-neutral constraint condition expression is:

$$\int_0^\infty xp(x)dx = e^{\int_0^T r(t)dt} S_0 \quad ;$$

wherein $C_i$, T, $S_0$ and r(t), which are the predetermined information, denote the price of the digital option, the maturity of the digital option, the current asset value and the interest rate at time t, respectively.

The invention according to claim 13 is the computer calculation processing method according to any of claims 2 to 6, characterized in that:

risk-neutral probability distribution obtained by applying the predetermined risk-neutral probability distribution expression to time-reversed economy is indicated by:

$$\gamma(x) = (\lambda' + \beta' x + \sum_{i=1}^{n} \nu'_i D_i(x))^{\frac{1}{\alpha-1}}$$

wherein $D_i(x)$ denotes a payment function corresponding to a derivative, $\lambda'$, $\beta'$ and $\nu'_i$ denote the Lagrange undetermined multipliers, and n denotes the number of constraint conditions;
the probability distribution normalization condition expression is:
$$\int_0^\infty \gamma(x)dx = 1 \quad ;$$

the input data constraint condition expression is:
$$\int_0^\infty D_i(x)\gamma(x)dx = C_i \quad ;$$

and
the risk-neutral constraint condition expression is:
$$\int_0^\infty x\,\gamma(x)dx = e^{-\int_0^T r(t)dt} K \quad ;$$

wherein $C_i$, T, K and r(t) denote the price of the derivative, the maturity of the derivative, the exercise price of the derivative and the interest rate at time t, respectively, and thereby, the risk-neutral probability in regressing economy, which is the time-reversed economy, is determined to calculate the gamma of the derivative; and
the output step further outputs the gamma of the derivative.

The invention according to claim 14 is the computer calculation processing method according to claim 2, 3, 7, 8 or 9, characterized in that:

risk-neutral probability distribution obtained by applying the predetermined risk-neutral probability distribution expression to time-reversed economy is indicated by:

$$\gamma(x) = (\lambda' + \beta' x + \sum_{i=1}^{n} \nu'_i (S_i - x)^+)^{\frac{1}{\alpha-1}}$$

wherein $\lambda'$, $\beta'$ and $\nu'_i$ denote the Lagrange undetermined multipliers, $S_i$ denotes the current asset value, and n denotes the number of constraint conditions;
the probability distribution normalization condition expression is:
$$\int_{0}^{\infty} \gamma(x)dx = 1 \quad ;$$

the input data constraint condition expression is:
$$\int_{0}^{\infty} (S_i - x)^+ \gamma(x)dx = C_i \quad ;$$

and
the risk-neutral constraint condition expression is:
$$\int_{0}^{\infty} x \, \gamma(x)dx = e^{-\int_{0}^{T} r(t)dt} K \quad ;$$

wherein $C_i$, T, K and r(t) denote the price of a call option, the maturity of the call option, the exercise price of the call option and the interest rate at time t, respectively, and thereby, the risk-neutral probability in regressing economy, which is the time-reversed economy, is determined to calculate the gamma of the option; and the output step further outputs the gamma of the option.
The invention according to claim 15 is the computer calculation processing method according to claim 2, 3, 10, 11 or 12, characterized in that:

risk-neutral probability distribution obtained by applying the predetermined risk-neutral probability distribution expression to time-reversed economy is indicated by:

$$\gamma(x) = (\lambda' + \beta' x + \sum_{i=1}^{n} \nu'_i \Theta(S_i - x))^{\frac{1}{\alpha-1}}$$

wherein $\Theta$ denotes a Heaviside function, $\Theta(S_i-x)$ denotes a payment function of a digital option, $\lambda'$, $\beta'$ and $\nu'_i$ denote the Lagrange undetermined multipliers, $S_i$ denotes the current asset value, and n denotes the number of constraint conditions;
the probability distribution normalization condition expression is:
$$\int_0^\infty \gamma(x)dx = 1 \ ;$$

the input data constraint condition expression is:
$$\int_0^\infty \Theta(S_i - x)\gamma(x)dx = C_i \ ;$$

and
the risk-neutral constraint condition expression is
$$\int_0^\infty x\,\gamma(x)dx = e^{-\int_0^T r(t)dt}\,K \ ;$$

wherein $C_i$, T, $S_i$ K and r(t) denote the price of the digital option, the maturity of the digital option, the current asset value, the exercise price of the digital option and the interest rate at time t, respectively, and thereby, the risk-neutral probability in regressing economy, which is the time-reversed economy, is determined to calculate the gamma of the digital option; and the output step further outputs the gamma of the digital option.

The invention according to claim 16 is the computer calculation processing method according to claim 13, 14 or 15, characterized in that: the calculated risk-neutral probability $\gamma(x)$ is integrated to calculate a hedge strategy delta; and the output step further outputs the hedge strategy delta.

The invention according to claim 17 is the computer calculation processing method according to any of claims 2 to 12, characterized in that:

a tail distribution variable

$$\mu = \frac{1}{1-\alpha}$$

is determined with the use of the power coefficient; and the output step further outputs the tail distribution variable.

The invention according to claim 18 is the computer calculation processing method according to any of claims 1 to 17, characterized in further comprising: a terminal transmission step of a user terminal accepting input of setting information including the underlying asset type, desired exercise price and desired maturity of a derivative product desired by a user and transmitting the setting information to the computer via a network; an information receiving step of the computer receiving market information about the derivative product collected by interface means and the setting information transmitted from the user terminal, as the predetermined information held by the multiple constraint condition expressions as coefficients; and a terminal receiving step of receiving and outputting probability distribution outputted by the output means via the network, by the user terminal.

The invention according to claim 19 is the computer calculation processing method according to claim 18, characterized in that the market information includes the price of the underlying asset and the current interest rate.

The program according to claim 20 causes a computer to execute a computer calculation processing method for acquiring risk-neutral probability distribution by a nonparametric method on the basis of multiple constraint condition expressions, by a program of a computer, the method comprising: a simultaneous equations generation step of reading a predetermined risk-neutral probability distribution expression maximizing the entropy which is stored in storage means in advance, from the storage means, substituting the predetermined risk-neutral probability distribution expression into the multiple condition expressions to generate simultaneous equations including Lagrange undetermined multipliers, and storing the simultaneous equations in the storage means; a Lagrange multipliers calculation step of reading the generated simultaneous equations from the storage means, determining the solution of the simultaneous equations by numeric calculation means, deciding each of the Lagrange undetermined multipliers, and storing each of the Lagrange undetermined multipliers in the storage section as a Lagrange multiplier; and an output step of generating probability distribution by the calculation means on the basis of the predetermined risk-neutral probability distribution expression decided by the Lagrange multipliers read from the storage section and outputting the probability distribution by output means.

The invention according to claim 21 is a computer apparatus for acquiring risk-neutral probability distribution by a nonparametric method on the basis of multiple constraint condition expressions having predetermined information as coefficients, the computer apparatus being characterized in comprising: information input means for inputting the predetermined information; simultaneous equations generation means for reading a predetermined risk-neutral probability distribution expression maximizing the entropy which is stored in storage means in advance, from the storage means, substituting the predetermined risk-neutral probability distribution expression into the multiple constraint condition expressions to generate simultaneous equations including Lagrange undetermined multipliers, and storing the simultaneous equations in the storage means; Lagrange multipliers calculation means for reading the generated simultaneous equations from the storage means, determining the solution of the simultaneous equations by numeric calculation means, deciding each of the Lagrange undetermined multipliers, and storing each of the Lagrange undetermined multipliers in the storage section as a Lagrange multiplier; and output means for generating probability distribution by the calculation means on the basis of the predetermined risk-neutral probability distribution expression decided by the Lagrange multipliers read from the storage section and outputting the probability distribution.

The invention according to claim 22 is the computer apparatus according to claim 21, characterized in that the output means outputs the generated probability distribution and probability distribution obtained by a parametric method in a form enabling comparison between the probability distributions.

The invention according to claim 23 is characterized in comprising: a client terminal comprising input means for receiving input of predetermined information, transmission means for transmitting a calculation processing request including the received predetermined information via a network, and output means for receiving and outputting a result of processing performed in response to the calculation processing request; and a calculation processing server comprising request receiving means for receiving the calculation processing request transmitted from the client terminal via the network, storage means for storing data used in the calculation processing, calculation processing execution means for executing a computer calculation processing method for acquiring risk-neutral probability distribution by a nonparametric method on the basis of multiple constraint condition expressions having the received predetermined information as coefficients, by a program of a computer, and result transmission means for transmitting a result obtained by the calculation processing to the client terminal via the network.

The invention according to claim 24 is the risk evaluation system according to claim 23, characterized in that the calculation processing execution means executes a calculation processing method comprising: a simultaneous equations generation step of reading a predetermined risk-neutral probability distribution expression maximizing the entropy which is stored in storage means in advance, from the storage means, substituting the predetermined risk-neutral probability distribution expression into the multiple constraint condition expressions to generate simultaneous equations including Lagrange undetermined multipliers, and storing the simultaneous equations in the storage means; a Lagrange multipliers calculation step of reading the generated simultaneous equations from the storage means, determining the solution of the simultaneous equations by numeric calculation means, deciding each of the Lagrange undetermined multipliers, and storing each of the Lagrange undetermined multipliers in the storage section as a Lagrange multiplier; and an output step of generating probability distribution by the calculation means on the basis of the predetermined risk-neutral probability distribution expression decided by the Lagrange multipliers read from the storage section and outputting the probability distribution by output means.

The invention according to claim 25 is a computer calculation processing method for acquiring the gamma of a derivative by a program of a computer, the method being characterized in comprising: a simultaneous equations generation step of reading a predetermined risk-neutral probability distribution expression maximizing the entropy which is stored in storage means in advance, from the storage means, substituting the predetermined risk-neutral probability distribution expression into multiple constraint condition expressions having predetermined information as coefficients to generate simultaneous equations including Lagrange undetermined multipliers, and storing the simultaneous equations in the storage means; a Lagrange multipliers calculation step of reading the generated simultaneous equations from the storage means, determining the solution of the simultaneous equations by numeric calculation means, deciding each of the Lagrange undetermined multipliers, and storing each of the Lagrange undetermined multipliers in the storage section as a Lagrange multiplier; and an acquisition step of generating probability distribution by the calculation means on the basis of the predetermined risk-neutral probability distribution expression decided by the Lagrange multipliers read from the storage section and applying the generated risk-neutral probability distribution expression to time-reversed economy to acquire the gamma of the option by acquisition means.

The invention according to claim 26 is a computer calculation processing method for acquiring the gamma of an option by a program of a computer, the method being characterized in comprising: a simultaneous equations generation step of reading a predetermined risk-neutral probability distribution expression maximizing the entropy which is stored in storage means in advance, from the storage means, substituting the predetermined risk-neutral probability distribution expression into multiple constraint condition expressions having predetermined information as coefficients to generate simultaneous equations including Lagrange undetermined multipliers, and storing the simultaneous equations in the storage means; a Lagrange multipliers calculation step of reading the generated simultaneous equations from the storage means, determining the solution of the simultaneous equations by numeric calculation means, deciding each of the Lagrange undetermined multipliers, and storing each of the Lagrange undetermined multipliers in the storage section as a Lagrange multiplier; and an acquisition step of generating probability distribution by the calculation means on the basis of the predetermined risk-neutral probability distribution expression decided by the Lagrange multipliers read from the storage section and applying the generated risk-neutral probability distribution expression to time-reversed economy to acquire the gamma of the option by acquisition means.

The invention according to claim 28 is a computer calculation processing method for acquiring the gamma of a digital option by a program of a computer, the method being characterized in comprising: a simultaneous equations generation step of reading a predetermined risk-neutral probability distribution expression maximizing the entropy which is stored in storage means in advance, from the storage means, substituting the predetermined risk-neutral probability distribution expression into multiple constraint condition expressions having predetermined information as coefficients to generate simultaneous equations including Lagrange undetermined multipliers, and storing the simultaneous equations in the storage means; a Lagrange multipliers calculation step of reading the generated simultaneous equations from the storage means, determining the solution of the simultaneous equations by numeric calculation means, deciding each of the Lagrange undetermined multipliers, and storing each of the Lagrange undetermined multipliers in the storage section as a Lagrange multiplier; and an acquisition step of generating probability distribution by the calculation means on the basis of the predetermined risk-neutral probability distribution expression decided by the Lagrange multipliers read from the storage section and applying the generated risk-neutral probability distribution expression to time-reversed economy to acquire the gamma of the option by acquisition means.

BRIEF DESCRIPTION OF THE DRAWINGS

Figure 1 is a block diagram showing the whole system of an embodiment according to the present invention;
Figure 2 is a diagram showing the flow of the processing of an embodiment according to the present invention;
Figure 3 is a diagram showing the probability distribution using various $\alpha$'s of an embodiment of the present invention;
Figure 4 is a diagram showing risk-neutral probability distribution obtained by the method of this example;
Figure 5 is a diagram showing a graph determined with the option price obtained by integrating the above risk-neutral probability distribution twice, as a function of a current stock price $S_0$;
Figure 6 is a diagram showing a gamma obtained by the method of this example;
Figure 7 is a diagram showing a delta obtained by the method of this example;
Figure 8 is a conceptual diagram of the system of an embodiment of the present invention;
Figure 9 is a diagram showing the setting screen and the evaluation result output screen to be displayed on a general user terminal, of an embodiment of the present invention; and
Figure 10 is a flowchart showing a service provided for a general user terminal by the website server of an embodiment of the present invention.

BEST MODE FOR CARRYING OUT THE INVENTION

(Principle of the present invention)

The present invention is achieved in accordance with the principle below.
(1) A conventional model-dependent method is a method in which actual price fluctuation is never described correctly, and there is a strong possibility to suffer a loss related to a model risk. Therefore, a nonparametric method which does not use a model is basically adopted in order to avoid the model risk. A maximum entropy method is used which is especially efficient among nonparametric methods.

(2) It is possible to set the price of a derivative on the basis of a conventional nonparametric method. However, it is impossible to find a correct hedge strategy, and it is difficult to actually realize a profit if a hedge strategy is not given. Therefore, especially with the use of the time-reversal symmetry of a vanilla option, attention is paid to the point that risk-neutral probability in time-reversed economy is given by the gamma of the vanilla option to determine a hedge strategy (a delta or a gamma).

Now, the reason for using the maximum entropy method as the nonparametric method will be described. In this technical field, the entropy of given probability distribution is for measuring the degree of disorder accompanying the distribution. In general, the entropy (H[p]) is obtained by integrating the concave function of a distribution function p (x), and, for example, it is shown by the following expression:

$$H[p] = \frac{1}{1-\alpha} \ln \int_{0}^{\infty} p^{\alpha}(x) dx$$

As described above, such an entropy indicates disorder, and it also means "a negative amount of information" as known in the art. Therefore, it can be said that distribution which maximizes the entropy is distribution having the minimum necessary amount of information.

In general, when some information is given to an unknown distribution function p(x), the information gives constraint to the distribution function p(x). Distribution which maximizes the entropy under conditions satisfying such constraint is distribution having the minimum amount of information as described above. That is, it can be said that the distribution does not include information that is not given, at all. On the contrary, distribution which does not maximize the entropy is imbalanced distribution including information which is not given.

Accordingly, since information which does not exist is excluded and an optimal result is given by maximizing the entropy, it is thought in the present invention that model-independent risk-neutral probability distribution can be obtained.

In accordance with the principle described above, computer calculation processing is performed under the policy as described below.

(a) When data of the market price of an option to be transacted is given, the risk-neutral probabilities in time-progressing economy and time-regressing economy are determined in parallel by a maximum entropy method accompanied by constraint with the use of the data.

(b) An option price against an exercise price not used in transaction is determined with the use of the risk-neutral probability in the time-progressing economy. In this case, the value of μ is determined so that the tail distribution is the smoothest.

(c) The gamma is determined with the use of the risk-neutral probability in the time-regressing economy.

(d) The delta of a hedge strategy is determined by integrating the gamma.

Here, in the maximum entropy method used in the case of determining the risk-neutral probability distribution, the Rennie's entropy is used. However, since other entropies can be used, the case of using the Shannon's entropy will be also described here in addition to the case of using the Rennie's entropy. The reason for using the Rennie's entropy in the maximum entropy method for determining the risk-neutral probability distribution is that its tail is in accordance with the power law. That is, it is shown that the financial market is generally in accordance with the power law ("A theory of power-law distributions in financial market fluctuations, Nature 2003" (Xavier Gabaix, Parameswaran Gopikrishnan, Vasiliki Plerou, H. Eugene Stanley)), and, for example, in the stock price fluctuation in the market, it can be said that the tail distribution is in accordance with the power law. Thus, the method using the Rennie's entropy, in which the risk-neutral probability distribution is in accordance with the power law gives a solution closer to the actual market.

(First embodiment)

An embodiment of the present invention will be described below in detail with reference to drawings. In this embodiment, description will be made on a calculation processing method for determining risk-neutral probability distribution by a maximum entropy method using the Rennie's entropy by a computer.

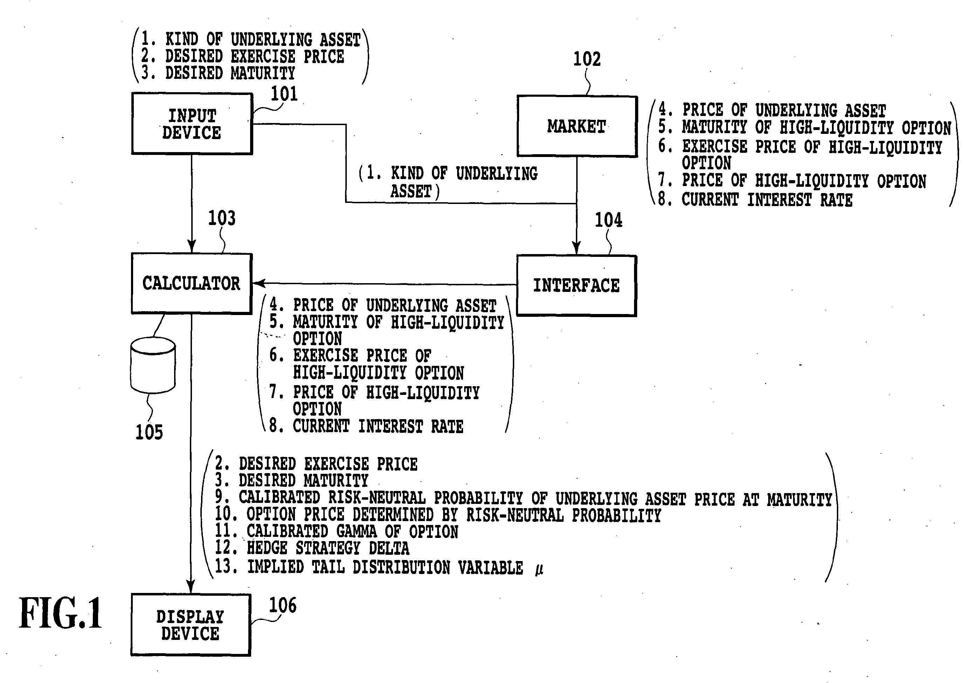

Figure 1 is a block diagram showing the system configuration of an embodiment according to the present invention. In this embodiment, the system is configured by an input device 101 into which arbitrarily set information is inputted, a market 102 which is the source of information indicating various market characteristics, a calculator 103 which receives various inputs, performs the calculation processing of the present invention and issues an output instruction, an interface 104 which collects information from the market and inputs the information to the calculator 103, a storage device 105 which stores the program of the present invention and various data generated during the calculation processing, and a display device 106 which is main output means. It goes without saying that output of a result of the calculation processing can be stored in the storage device 105 in addition to the display device 106, printed on a printing device (not shown) or transmitted via a communication line (not shown)

Ordinarily, when an operator inputs arbitrary information (in this embodiment, the kind of an underlying asset, a desired exercise price, a desired maturity and the like) into the input device 101, the interface 104 collects various information (in this embodiment, the price of the underlying asset, the maturity of a high-liquidity option and the like) from the market 102 and inputs the information to the calculator 103. The calculator 103 reads a calculation processing program from the storage device 105, performs calculation processing with the use of the inputted information and the market information, and outputs the result to the display device 106.

Thus, when the information such as a desired exercise price and maturity, a risk-neutral probability (and the price, gamma, hedge strategy delta, and implied tail distribution variable $\mu$ of an option, which are to be described later) is calculated and displayed on the display device 106, and thereby, the operator can evaluate a derivative product on the basis of the information.

(First example)

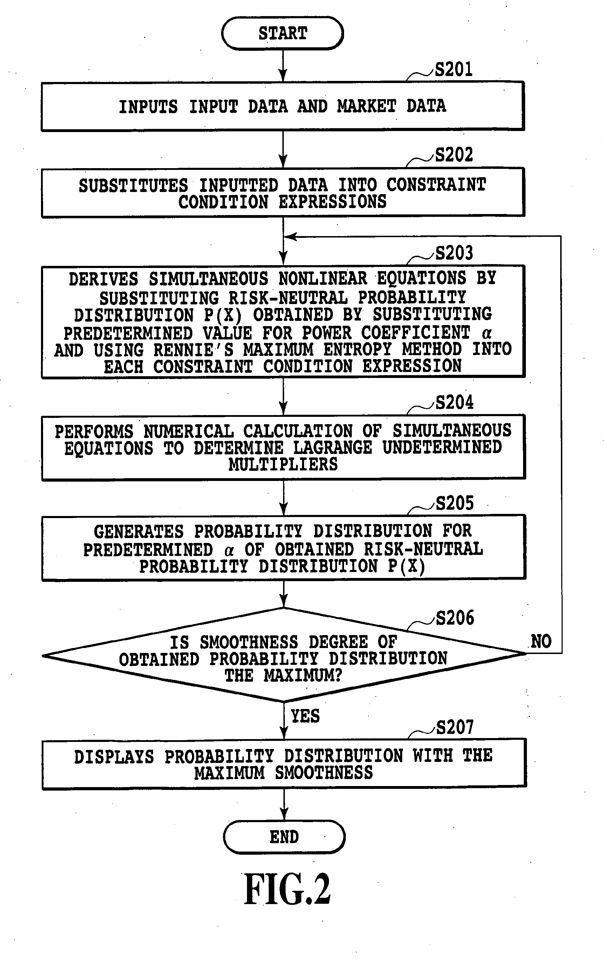

Each calculation processing of this example, that is, a calculation processing method for determining a risk-neutral probability p(x) with the use of a maximum entropy method using the Rennie's entropy will be described below. Figure 2 is a flowchart showing the calculation processing method for determining the risk-neutral probability p(x) of this example.

To the calculator 103 which performs the calculation processing, an exercise price K, a maturity T and the like are inputted via the input device 101, and a price $C_0$ of a call option (for example, an intermediate price; in this example, description will be made on the case where there is only one piece of reliable information though there are generally multiple call option prices), the current value $S_0$ of an underlying asset (a stock, an index, a bond or the like), the current interest rate r (in the example described here, the interest rate is assumed to be constant until the maturity of the option) and the like are collected from the market by the interface 104 and inputted (S201). The calculation processing by the calculator 103 is performed on the basis of the above information.

Here, a maximum entropy method accompanied by constraint is used, and specific constraints are as follows. A first constraint condition is a probability distribution normalization condition:

$$\int_0^\infty p(x)dx = 1 \qquad\qquad (1)$$

A second constraint condition is a condition about input data:

$$\int_0^\infty (x - K)^+ p(x)dx = e^{rT}C_0 \qquad\qquad (2)$$

A third constraint condition is a risk-neutral condition:

$$\int_0^\infty xp(x)dx = e^{rT}S_0 \qquad\qquad (3)$$

Such distribution that maximizes the entropy under the condition that these constraint conditions (1) to (3) are given is determined. Specifically, this embodiment uses the Rennie's entropy:

$$H[p] = \frac{1}{1-\alpha} \ln \int_0^\infty p^\alpha(x)dx$$

$$(4)$$

wherein $\alpha$ is a positive constant. When such risk-neutral probability distribution as maximizes the Rennie's entropy (4) is calculated on the basis of the constraints described above, the following solution is obtained:

$$p(x) = \left( \lambda + \beta x + \nu(x-K)^+ \right)^{\frac{1}{\alpha-1}}$$

$$(5)$$

wherein the three variables $\lambda$, $\beta$ and $\nu$ are Lagrange undetermined multipliers accompanying the constraints, and $\{X\}^+ = \max\{X, 0\}$ is assumed. When the formula (5) in which a predetermined value is substituted for $\alpha$ is substituted into the above formulas (1), (2) and (3), simultaneous nonlinear equations satisfied by the undetermined multipliers can be obtained (S202 to S203). Though the method for determining the formula (5) by the maximum entropy method is not described in detail here, the determination can be performed by a method known in the art. The method for determining the simultaneous nonlinear equations by substituting the formula (5) into each constraint condition expression is not described in detail in this example, either, because any method known in the art can be used.

These simultaneous equations can be solved with the use of numeric calculation (such as a root finder) known in the art. By substituting a root obtained as the result into (5), the risk-neutral probability $p(x)$ for the underlying asset price $S_0$ at the maturity T can be determined (S204).

Since $p(x)$ determined in this way shows various distributions depending on the predetermined value substituted as the value of $\alpha$, the most appropriate value must be identified as the value of $\alpha$. In this example, since such $\alpha$ that the distribution of the determined $p(x)$ is the smoothest is the most appropriate as the power coefficient of the risk-neutral probability, the identification is performed with this as a criterion. That is, probability distributions are generated for various $\alpha$'s (S205), and then, the smoothness degree of each probability distribution is determined, and the value of $\alpha$ with which the smoothness degree is maximized is decided as the power coefficient with which the probability distribution is the most smoothest (S206).

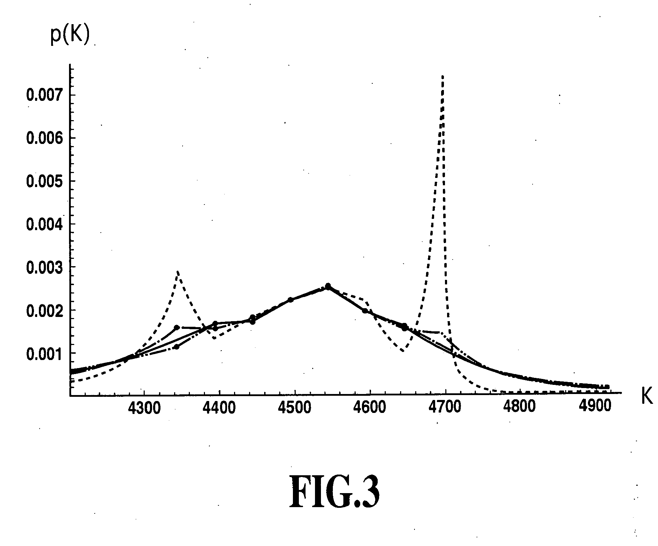

Specifically, probability distributions with the various $\alpha$'s are generated as shown in Figure 3, the difference between the gradient values on the right and left of each point in the risk-neutral probability distribution is determined, and the absolute values of the differences are totaled. Such $\alpha$ that the total of the absolute values of the gradient values of the respective probability distributions is the smallest is determined as the power coefficient. Finally, the obtained risk-neutral probability distribution is outputted, and the flow ends (S207).

Though the limiting expressions as shown above are used for the purpose of description, the various formulas which can be used in the present invention are not limited to these. One skilled in the art would easily understand that extended expressions as shown below can be used, from the above description.

$$\int_0^\infty p(x)dx = 1$$

$$(1')$$

$$\int_0^\infty (x-K_i)^+ p(x)dx = e^{\int_0^T r(t)dt} C_i$$

$$(2')$$

$$\int_0^\infty xp(x)dx = e^{\int_0^T r(t)dt} S_0$$

( 3 ' )

$$p(x) = (\lambda + \beta x + \sum_{i=1}^n \nu_i (x - K_i)^+)^{\frac{1}{\alpha-1}}$$

( 5 ' )

wherein $(x-K_i)^+$ denotes a payment function of a call option, $C_i$, T, $S_0$ and r(t), which are the predetermined information, denote the price of the call option, the maturity of the call option, the current asset value and the interest rate at time t, respectively.

Similarly, when the risk-neutral probability distribution expression for a derivative is determined, the following expressions can be obtained.

The probability distribution normalization condition expression is:

$$\int_0^\infty p(x)dx = 1 \quad ;$$

the input data constraint condition expression is:

$$\int_0^\infty D_i(x)p(x)dx = e^{\int_0^T r(t)dt} C_i \quad ;$$

the risk-neutral constraint condition expression is:

$$\int_0^\infty xp(x)dx = e^{\int_0^T r(t)dt} S_0 \quad ;$$

and

the risk-neutral probability distribution expression is:

$$p(x) = (\lambda + \beta x + \sum_{i=1}^n \nu_i D_i(x))^{\frac{1}{\alpha-1}}$$

wherein $D_i(x)$ denotes a payment function corresponding to a derivative, $\lambda$, $\beta$ and $\nu_i$ denote the Lagrange undetermined multipliers, n denotes the number of constraint conditions, and $\alpha$ denotes a power coefficient.

Furthermore, when the risk-neutral probability distribution expression for a digital option is determined, the following expressions can be obtained.

The probability distribution normalization condition expression is:

$$\int_0^\infty p(x)dx = 1 \;;$$

the input data constraint condition expression is:
$$\int_0^\infty \Theta(x - K_i)p(x)dx = e^{\int_0^T r(t)dt} C_i \;;$$

the risk-neutral constraint condition expression is:
$$\int_0^\infty xp(x)dx = e^{\int_0^T r(t)dt} S_0 \;;$$

and
the risk-neutral probability distribution expression is:
$$p(x) = (\lambda + \beta x + \sum_{i=1}^n \nu_i \Theta(x - K_i))^{\frac{1}{\alpha-1}}$$

wherein $\Theta$ denotes a Heaviside function, $\Theta(x-K_i)$ denotes a payment function of a digital option, $\lambda$, $\beta$ and $\nu_i$ denote the Lagrange undetermined multipliers, $K_i$ denotes an exercise price, n denotes the number of constraint conditions, and $\alpha$ denotes a power coefficient. Furthermore, $C_i$, T, $S_0$ and r(t), which are the predetermined information, denote the price of the digital option, the maturity of the digital option, the current asset value and the interest rate at time t, respectively.

(Processing in a specific example)

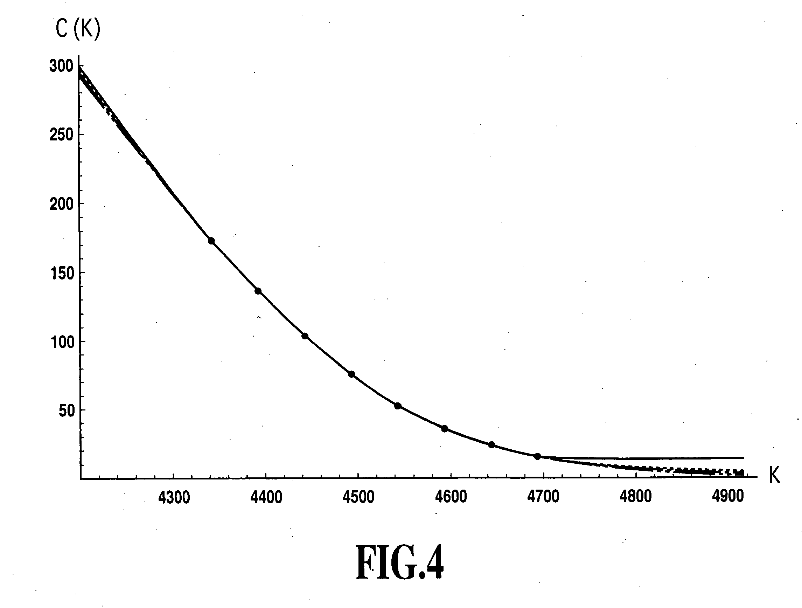

Figure 4 shows a specifically derived price of a call option. As input data, the data of the FTSE100 future option on January 27, 2004 is used. The maturity is March 19, 2004, and the value of INDEX on January 27, 2004 is 4469.
Thus, it is possible to obtain model-independent risk-neutral probability distribution in which the tail distribution is in accordance with the power law.

(Second example)

This example relates to a computer calculation processing method for calculating a risk-neutral probability $\gamma(x)$ in regressing economy with the use of the Shannon's maximum entropy method. Here, the time-reversal symmetry of a vanilla option is especially used to determine a hedge strategy (a delta or a gamma). Here, the delta $\Delta(x)$ is shown as follows:
$$\Delta(x) = \int_0^x \gamma(u)du$$

Specifically, attention is paid to that the risk-neutral probability in time reversed economy is given by the gamma of a vanilla option.

In this example also, the maximum entropy method is used similarly to the first example. Since the calculation processing is similar to that described above, description of common parts is omitted. Specific constraints are as follows. The Shannon's entropy is used here. First, the probability distribution normalization condition is:

$$\int_0^\infty \gamma(x)dx = 1 \qquad (6)$$

Next, a condition about input data is:

$$\int_0^\infty (S_0 - x)^+ \gamma(x)dx = C_0 \qquad (7)$$

Risk-neutral condition is:

$$\int_0^\infty x\gamma(x)dx = e^{-rT}K \qquad (8)$$

Such distribution as maximizes the entropy under the situation where these constraint conditions are given is determined. Here, the Shannon's entropy expression H[p] shown below is used.

$$H[p] = -\int_0^\infty p(x)\log(p(x))dx$$

The option gamma obtained as the result is given by the following expression:

$$\gamma(x) = \exp(\lambda' + \beta'x + \nu'(S_0 - x)^+) \qquad (9)$$

Here again, the three variables $\lambda'$, $\beta'$ and $\nu'$ are Lagrange undetermined multipliers accompanying the constraints. When the formula (9) is substituted into the above formulas (6), (7) and (8), simultaneous nonlinear equations satisfied by the undetermined multipliers can be obtained. These simultaneous equations can be solved with the use of numeric calculation (such as a root finder). By substituting the result into (9), a calibrated risk-neutral probability in time-reversed economy for the price of the underlying asset at the maturity, that is, the gamma of the option is determined. If the Rennie's entropy is used for determining the gamma, the power law like (9) is obtained.

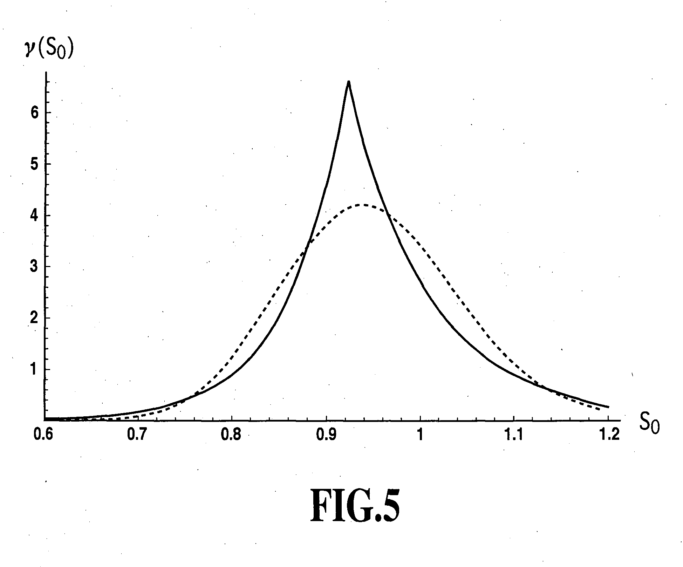

Figure 5 is a diagram showing the gamma obtained by the method of this example. It is assumed that the input conditions are: the exercise price K=1; the maturity T=1 (year); the current underlying asset price $S_0$=0.92, the current interest rate r=5%, and the implied volatility σ=10%.

Here, when the expressions used in this example are extended similarly to the first example, each expression can be extended for a call option as described below. This would be apparent to one skilled in the art. In the expressions, the Rennie's entropy is used.

$$\int_0^\infty \gamma(x)dx = 1 \qquad (6')$$

$$\int_0^\infty (S_i - x)^+ \gamma(x)dx = C_i \qquad (7')$$

$$\int_0^\infty x\,\gamma(x)dx = e^{-\int_0^T r(t)dt} K \qquad (8')$$

$$\gamma(x) = (\lambda' + \beta' x + \sum_{i=1}^n \nu'_i (S_i - x)^+)^{\frac{1}{\alpha-1}} \qquad (9')$$

Here, λ', β' and ν'$_i$ are Lagrange undetermined multipliers; S$_i$ denotes the current asset value (actually, there is only one current asset value and there are multiple exercise prices, and therefore, the value of the asset value S$_i$ is determined by backward counting so that the scaling law

$$C_i(\lambda K_i, S_i) = \lambda C(K_i, \lambda^{-1} S_i)$$

is satisfied for each exercise price K$_i$ and a call option price C$_i$ corresponding thereto); n is the number constraint conditions; C$_i$, T, K and r(t) are the price of the call option, the maturity of the call option, the exercise price of the call option, and the interest rate at time t, respectively.

As for a derivative, each expression can be extended as follows:

$$\int_0^\infty \gamma(x)dx = 1 \qquad (6'')$$

$$\int_0^\infty D_i(x)\gamma(x)dx = C_i \qquad (7''')$$

$$\int_0^\infty x\,\gamma(x)dx = e^{-\int_0^T r(t)dt}K \qquad (8'')$$

$$\gamma(x) = (\lambda' + \beta'x + \sum_{i=1}^n \nu'_i D_i(x))^{\frac{1}{\alpha-1}} \qquad (9'')$$

Here, $\lambda'$, $\beta'$ and $\nu'_i$ are Lagrange undetermined multipliers; $S_i$ denotes the current asset value (actually, there is only one current asset value and there are multiple exercise prices, and therefore, the value of the asset value $S_i$ is determined by backward counting so that the scaling law

$$C_i(\lambda K_i; S_i) = \lambda C(K_i, \lambda^{-1}S_i)$$

is satisfied for each exercise price $K_i$ and a derivative price $C_i$ corresponding thereto); n is the number constraint conditions; $C_i$, T, K and r(t) are the price of the derivative, the maturity of the derivative, the exercise price of the derivative, and the interest rate at time t, respectively. $D_i(x)$ is a payment function corresponding to the derivative.

Furthermore, when each expression is extended for a digital option, the following are obtained:

$$\int_0^\infty \gamma(x)dx = 1 \qquad (6''')$$

$$\int_0^\infty \Theta(S_i - x)\gamma(x)dx = C_i \qquad (7''')$$

$$\int_0^\infty x\,\gamma(x)dx = e^{-\int_0^T r(t)dt}\cdot K \qquad (8''')$$

$$\gamma(x) = (\lambda' + \beta' x + \sum_{i=1}^{n} v'_i \Theta(S_i - x))^{\frac{1}{\alpha - 1}} \qquad (9''')$$

Here, $\lambda'$, $\beta'$ and $v'_i$ are Lagrange undetermined multipliers; $S_i$ denotes the current asset value (actually, there is only one current asset value and there are multiple exercise prices, and therefore, the value of the asset value $S_i$ is determined by backward counting so that the scaling law

$$C_i(\lambda K_i, S_i) = \lambda C(K_i, \lambda^{-1} S_i)$$

is satisfied for each exercise price $K_i$ and a derivative price $C_i$ corresponding thereto); n is the number constraint conditions; $C_i$, T, $S_i$, K and r(t) are the price of the digital option, the maturity of the digital option, the current asset value, the exercise price of the digital option, and the interest rate at time t, respectively. The symbol $\Theta$ denotes a Heaviside function, and $\Theta(S_i-x)$ denotes a payment function of the digital option.

Thus, the risk-neutral probability distribution (gamma) in time reversed economy can be calibrated. It is possible to find a gamma hedge strategy by using this gamma. The gamma included in a variable called GREEK is important from a viewpoint of a hedge strategy.

(Third example)

This example relates to a computer calculation processing method for determining a hedge strategy (delta). In order to determine a hedge strategy (delta), the gamma obtained in the second example described above is used. Specifically, the delta is determined by integrating the gamma. That is, the integration value is determined by the expression as shown below:

$$\Delta(x) = \int_{0}^{x} \gamma(u) du \qquad (10)$$

The solution of this integral equation may be by any method known in the art.

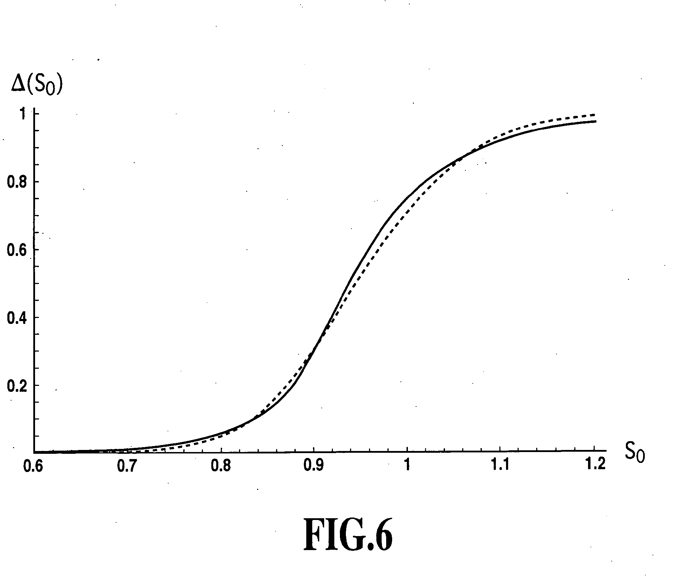

Figure 6 is a diagram showing a delta obtained by the method of this example. The input conditions are the same as those in Figure 5 indicating the result determined in the second example. That is, the result of integrating the gamma shown in Figure 5 is shown in Figure 6.

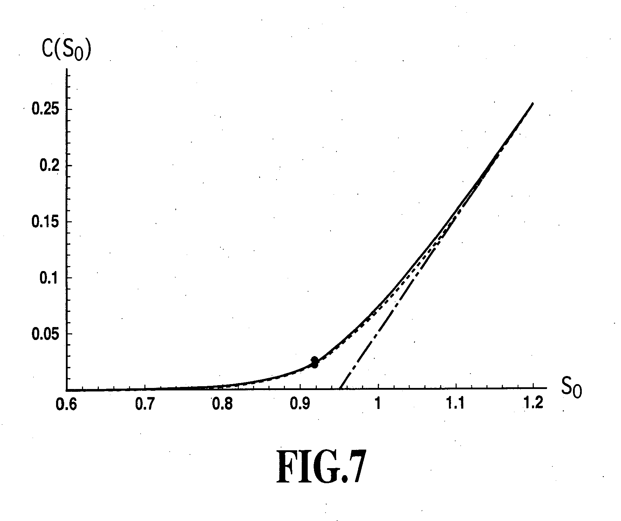

The graph of the option price determined by the method of this example is shown by the solid-line curve in Figure 7, while the graph of the option price determined from probability distribution obtained by the Black-Scholes model under the same conditions is shown by a broken line for comparison. Specifically, the option price $C_0$=0.9524, a condition for determining the probability distribution in Figure 4, is the price of "At the Money" option with a volatility of 30% in the Black-Scholes model. By calculating the risk-neutral probability distribution with the condition and determining the option price based thereon, the broken-line curve in Figure 7 is obtained.

As shown in Figure 7, it is seen that the result obtained by this example is relatively close to the Black-Scholes model.

Thus, it is possible to obtain a hedge strategy (delta), and thereby, it is possible to find a correct hedge strategy and effectively achieve actual profit.

(Fourth example)

This example relates to a computer calculation processing method for determining a variable $\alpha$ which gives tail distribution. It becomes impossible to differentiate the risk-neutral probability p(x) obtained here at the point when the calibration is performed, though the risk-neutral probability p(x) is continuous, as seen from the formula (5). Therefore, the gradient value of the distribution, function p(x) is calculated on the right and left of the point where the calibration has been performed, and such a value of $\alpha$ as causes the gradient difference to be the smallest is determined as the best value. This is because the value of $\alpha$ which minimizes the gradient difference gives risk-neutral probability distribution as such that is close to the most smoothest (that is, differentiable) function.

Though the actual $\alpha$ is limited to the range of $1/2<\alpha<1$, it is seen from the formula (5) that such $\mu$ that the tail distribution is p(x) to $x^{-\mu}$ is given with the use of $\alpha$ as below:

$$\mu = \frac{1}{1-\alpha} \qquad\qquad (1\ 0)$$

Accordingly, as the value of $\alpha$ changes from 1/2 to 1, the value of $\mu$ takes all possible values ($2<\mu<\infty$). As a result, it is possible to determine an implied tail which is implied by the market price of an option.

In a conventional' approach based on an underlying asset model, once a mode is identified, various derivatives can be evaluated on the basis thereon. In comparison, in the approach in the present invention, it is necessary to perform calibration for each of various derivatives. However, it is not practically a problem because the calibration in this case can be easily performed in a short time, and furthermore, it is stable.

(Second embodiment)

The object of this embodiment is to enable a general investor to perform transaction more easily by calculating various indexes of a financial derivative with the use of the computer calculation processing of the first embodiment described above.

That is, for example, by providing a stock option evaluation system using a nonparametric method using a maximum entropy method on a website, it is possible to promote transaction of an optional derivative product which has not been performed among general citizens because of its highly specialized nature. Such an optional derivative product is not so familiar to general investors because the use of a conventional evaluation system requires expertise. Actually, however, it is an attractive product with little risk in comparison with the current financial market with buying and selling of stocks as the central activity, to which general investors gather to seek for an arbitrage opportunity randomly on the basis of insider information, information from those who are in the same line of business similar to the insider information, and the like. Therefore, if it is possible to solve the problems of the conventional evaluation system and make the optional derivative product familiar to general investors, it not only satisfies the general investors' desire but also revitalizes the whole financial market. This embodiment has been devised to achieve the above object.

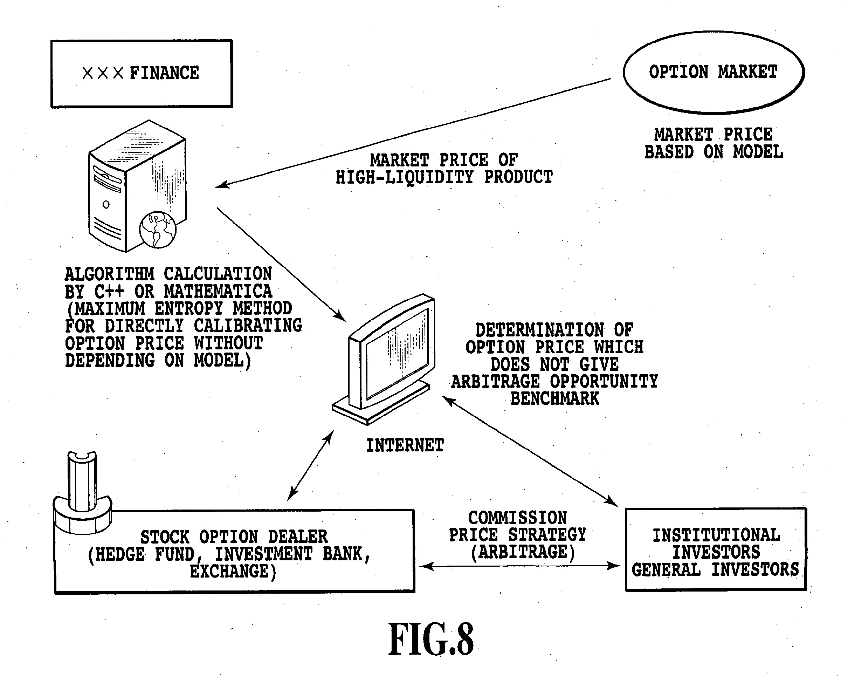

Figure 8 is a conceptual diagram of the system of this embodiment. This system is provided with an option market acquisition module 801, a computer calculation processing server 802, a website 803 provided by a provider, a general user terminal 804 used by the general investor or the like, a specialist terminal 805 used by a stock option dealer or the like, and the like. These components are basically connected with one another. However, the object of the present invention is achieved even if the general user terminal 804 and the specialist terminal 805 are not especially connected to each other. Especially, the general user terminal 804, the specialist terminal 805 and the website 803 are generally connected via the Internet.

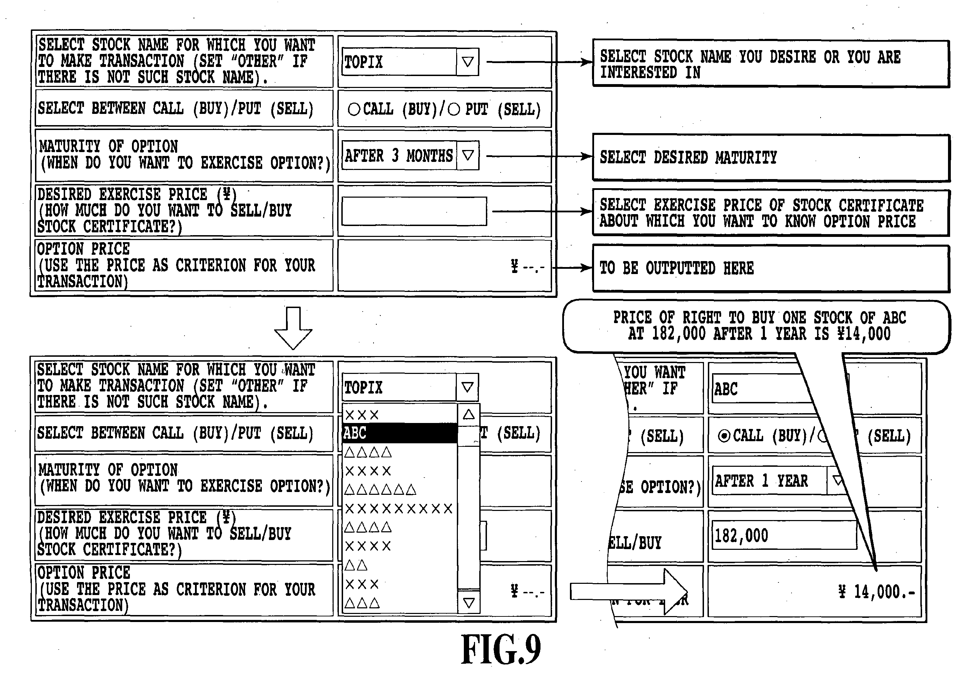

A general investor calls the website 803 from the general user terminal 804, and sets necessary information for a desired derivative in accordance with the guidance of the website 803. The necessary information includes a desired maturity, an exercise price and the like. However, it is not limited thereto. A display 901 in Figure 9 shows input by the general investor.

Figure 9 is a diagram showing a setting screen and an evaluation result output screen to be displayed on the general user terminal 804 of this embodiment. As setting information, in addition to the maturity and the exercise price, a desired stock name can be selected from a stock name list, as shown in a display 902 in Figure 9.

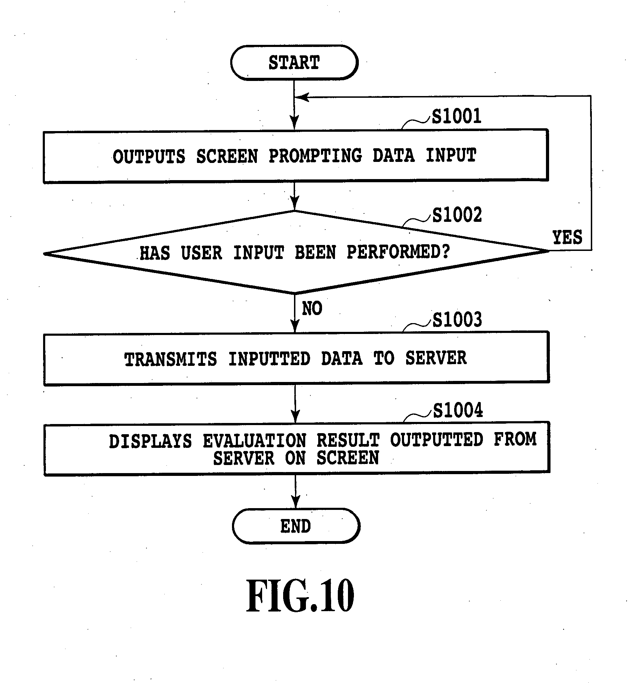

Figure 10 is a flowchart showing a service provided for the general user terminal 804 by the server of the website 803. First, the screen for inputting data is displayed as described above to wait for input by a user (S1001). When there is a user input, necessary information is set, and the user makes an input indicating that he desires start of evaluation, the set information is transmitted to the computer calculation processing server 802 (S1003). The computer calculation processing server 802 which has received the information performs the processing of the first embodiment described above on the basis of the received information and market data from the option market acquisition module 801, and transmits predetermined output data as the result of evaluation. When the general user terminal receives the evaluation result, the contents are displayed on the screen (S1004). The evaluated amount of the option is shown as the evaluation result on an output display 903 shown in Figure 9. However, the evaluation result is not limited thereto, and, for example, risk-neutral probability distribution or a gamma can be outputted.

Though description has been made mainly for general investors in this embodiment, the system of this embodiment can be also used by specialists. In this case, services similar to or more than those for general investors are provided via the specialist terminal 805. That is, since the system of this embodiment is simpler than the model-dependent evaluation system which has been used, and is used by general investors, risk managers and traders of investment banks can perform transactions with the general investors smoothly by checking the option price obtained by a model. Furthermore, it is possible to provide not only the option price but also information such as the risk-neutral probability, distribution of a future stock price which is implied by the market. Accordingly, speculators and the like can also think of an investment strategy on the basis of the evaluation result of this system because it is possible to assist more complicated option evaluation with the use of such various information.

As described above, it is possible for even a general individual investor to rationally and correctly evaluate a product and instinctively know the option price, and thereby, positive investment in optional derivative products is promoted.

Furthermore, by providing such a system from a website which can be widely and easily accessed, this evaluation result is used by a majority of investors. Thereby, there is a possibility that a benchmark is provided for the market. Actually, since this embodiment considers not only the use by general investors but also the use by specialist, it can be said that the calculated price by the evaluation system of this embodiment can be a criterion for transaction and can be a benchmark.

As described above, according to the present invention, there are provided: a simultaneous equations generation step of reading a predetermined risk-neutral probability distribution expression maximizing the entropy which is stored in storage means in advance, from the storage means, substituting the predetermined risk-neutral probability distribution expression into the multiple constraint condition expressions to generate simultaneous equations including Lagrange undetermined multipliers, and storing the simultaneous equations in the storage means; a Lagrange multipliers calculation step of reading the generated simultaneous equations from the storage means, determining the solution of the simultaneous equations by numeric calculation means, deciding each of the Lagrange undetermined multipliers, and storing each of the Lagrange undetermined multipliers in the storage section as a Lagrange multiplier; and an output step of generating probability distribution by the calculation means on the basis of the predetermined risk-neutral probability distribution expression decided by the Lagrange multipliers read from the storage section and outputting the probability distribution by output means. Therefore, it is possible to obtain such model-independent risk-neutral probability distribution that the tail distribution is in accordance with the power law.

Furthermore, by providing an evaluation device or system using the option evaluation method of the present invention, even a general individual investor can more rationally and correctly evaluate a product, and thereby, an effect of stimulating active investment is obtained.

INDUSTRIAL APPLICABILITY

More specifically, the present invention relates to a computer calculation processing method and program for determining risk-neutral probability distribution with the use of a maximum entropy method. According to the present invention, it is possible to obtain such model-independent risk-neutral probability distribution that the tail distribution is in accordance with the power law. Further more, it is possible to provide an evaluation device or system using the option evaluation method of the present invention.

**Claims**

1. A computer calculation processing method for acquiring risk-neutral probability distribution by a nonparametric method on the basis of multiple constraint condition expressions having predetermined information as coefficients, by a program of a computer, the method being **characterized in** comprising:

   a simultaneous equations generation step of reading a predetermined risk-neutral probability distribution expression maximizing the entropy which is stored in storage means in advance, from the storage means, substituting the predetermined risk-neutral probability distribution expression into the multiple constraint condition expressions to generate simultaneous equations including Lagrange undetermined multipliers, and storing the simultaneous equations in the storage means;
   a Lagrange multipliers calculation step of reading the generated simultaneous equations from the storage means, determining the solution of the simultaneous equations by numeric calculation means, deciding each of the Lagrange undetermined multipliers, and storing each of the Lagrange undetermined multipliers in the storage section as a Lagrange multiplier; and
   an output step of generating probability distribution by the calculation means on the basis of the predetermined risk-neutral probability distribution expression decided by the Lagrange multipliers read from the storage section and outputting the probability distribution by output means.

2. The computer calculation processing method according to claim 1, **characterized in that**:

the risk-neutral probability distribution expression is a predetermined risk-neutral probability distribution expression maximizing the Rennie's entropy, and the multiple constraint condition expressions are a probability distribution normalization condition expression, an input data constraint condition expression and a risk-neutral constraint condition expression;

in the simultaneous equations generation step, the simultaneous equations are generated by setting a predetermined value for a power coefficient in the risk-neutral probability distribution expression;

the method further comprises a power coefficient decision step of setting multiple values for the power coefficient in the predetermined risk-neutral probability distribution expression decided by the Lagrange multipliers read from the storage section to generate multiple probability distribution expressions, by the calculation means, and setting the predetermined value which maximizes the smoothness degree of the probability distribution among the generated multiple probability distribution expressions, as the power coefficient of the probability distribution expression to be determined.

3. The computer calculation processing method according to claim 2, **characterized in that**, in the power coefficient calculation step, the difference between the gradient values on the right and left of each predetermined point in the generated probability distribution is determined, and such a power coefficient as minimizes the total of the absolute values of the gradient value differences is set as the power coefficient which maximizes the smoothness degree.

4. The computer calculation processing method according to claim 2 or 3, **characterized in that** the predetermined risk-neutral probability distribution expression p(x) indicates risk-neutral probability distribution for the price of an underlying asset at maturity with the use of the price of a high-liquidity derivative product.

5. The computer calculation processing method according to claim 4, **characterized in that** the predetermined risk-neutral probability distribution expression p(x) is:

$$p(x) = (\lambda + \beta x + \sum_{i=1}^{n} v_i D_i(x))^{\frac{1}{\alpha-1}}$$

wherein $D_i(x)$ denotes a payment function corresponding to a derivative, $\lambda$, $\beta$ and $v_i$ denote the Lagrange undetermined multipliers, n denotes the number of constraint conditions, and $\alpha$ denotes the power coefficient.

6. The computer calculation processing method according to claim 5, **characterized in that**:

the probability distribution normalization condition expression is:

$$\int_{0}^{\infty} p(x)dx = 1 \quad ;$$

the input data constraint condition expression is:

$$\int_{0}^{\infty} D_i(x)p(x)dx = e^{\int_{0}^{T} r(t)dt} C_i \quad ;$$

and
the risk-neutral constraint condition expression is:

$$\int_0^\infty xp(x)dx = e^{\int_0^T r(t)dt} S_0 \;;$$

wherein $C_i$, T, $S_0$ and r(t), which are the predetermined information, denote the price of the derivative, the maturity of the derivative, the current asset value and the interest rate at-time t, respectively, and $D_i(x)$ generally denotes a payment function corresponding to the derivative.

7. The computer calculation processing method according to claim 2 or 3, **characterized in that**, as for a call option, the predetermined risk-neutral probability distribution expression p(x) indicates risk-neutral probability distribution for the price of an underlying asset at maturity with the use of the price of a high-liquidity call option.

8. The computer calculation processing method according to claim 7, **characterized in that** the predetermined risk-neutral probability distribution expression p(x) is:

$$p(x) = (\lambda + \beta x + \sum_{i=1}^{n} \nu_i (x - K_i)^+)^{\frac{1}{\alpha-1}}$$

wherein $(x-K_i)^+$ denotes a payment function of the call option, $\lambda$, $\beta$ and $\nu_i$ denote the Lagrange undetermined multipliers, $K_i$ denotes an exercise price, n denotes the number of constraint conditions, and $\alpha$ denotes the power coefficient.

9. The computer calculation processing method according to claim 8, **characterized in that**:

the probability distribution normalization condition expression is:

$$\int_0^\infty p(x)dx = 1 \;;$$

the input data constraint condition expression is:

$$\int_0^\infty (x - K_i)^+ p(x)dx = e^{\int_0^T r(t)dt} C_i \;;$$

and
the risk-neutral constraint condition expression is:

$$\int_0^\infty xp(x)dx = e^{\int_0^T r(t)dt} S_0 \;;$$

wherein $(x-K_i)^+$ denotes a payment function of the call option, $C_i$, T, $S_0$ and r(t), which are the predetermined information, denote the price of the call option, the maturity of the call option, the current asset value and the interest rate at time t, respectively.

10. The computer calculation processing method according to claim 2 or 3, **characterized in that**, as for a digital option, the predetermined risk-neutral probability distribution expression p(x) indicates risk-neutral probability distribution for the price of an underlying asset at maturity with the use of the price of a high-liquidity digital option product.

**11.** The computer calculation processing method according to claim 10, **characterized in that** the predetermined risk-neutral probability distribution expression p(x) is:

$$p(x) = (\lambda + \beta x + \sum_{i=1}^{n} v_i \Theta(x - K_i))^{\frac{1}{\alpha-1}}$$

wherein $\Theta$ denotes a Heaviside function, $\Theta(x-K_i)$ denotes a payment function of the digital option, $\lambda$, $\beta$ and $v_i$ denote the Lagrange undetermined multipliers, $K_i$ denotes an exercise price, n denotes the number of constraint conditions, and $\alpha$ denotes the power coefficient.

**12.** The computer calculation processing method according to claim 11, **characterized in that**:

the probability distribution normalization condition expression is:

$$\int_0^\infty p(x)dx = 1 \quad;$$

the input data constraint condition expression is:

$$\int_0^\infty \Theta(x - K_i)p(x)dx = e^{\int_0^T r(t)dt} C_i \quad;$$

and
the risk-neutral constraint condition expression is:

$$\int_0^\infty xp(x)dx = e^{\int_0^T r(t)dt} S_0 \quad;$$

wherein $C_i$, T, $S_0$ and r(t), which are the predetermined information, denote the price of the digital option, the maturity of the digital option, the current asset value and the interest rate at time t, respectively.

**13.** The computer calculation processing method according to any of claims 2 to 6, **characterized in that**:

risk-neutral probability distribution obtained by applying the predetermined risk-neutral probability distribution expression to time-reversed economy is indicated by:

$$\gamma(x) = (\lambda' + \beta' x + \sum_{i=1}^{n} v'_i D_i(x))^{\frac{1}{\alpha-1}}$$

wherein $D_i(x)$ denotes a payment function corresponding to a derivative, $\lambda'$, $\beta'$ and $v'_i$ denote the Lagrange undetermined multipliers, and n denotes the number of constraint conditions;
the probability distribution normalization condition expression is:

$$\int_0^\infty \gamma(x)dx = 1 \quad ;$$

the input data constraint condition expression is:

$$\int_0^\infty D_i(x)\gamma(x)dx = C_i \quad ;$$

and

the risk-neutral constraint condition expression is:

$$\int_0^\infty x\,\gamma(x)dx = e^{-\int_0^T r(t)dt}\,K \quad ;$$

wherein $C_i$, T, K and r(t) denote the price of the derivative, the maturity of the derivative, the exercise price of the derivative and the interest rate at time t, respectively, and thereby, the risk-neutral probability in regressing economy, which is the time-reversed economy, is determined to calculate the gamma of the derivative; and
the output step further outputs the gamma of the derivative.

14. The computer calculation processing method according to claim 2, 3, 7, 8 or 9, **characterized in that**:

risk-neutral probability distribution obtained by applying the predetermined risk-neutral probability distribution expression to time-reversed economy is indicated by:

$$\gamma(x) = (\lambda' + \beta' x + \sum_{i=1}^n v'_i (S_i - x)^+)^{\frac{1}{\alpha-1}}$$

wherein $\lambda'$, $\beta'$ and $v'_i$ denote the Lagrange undetermined multipliers, $S_i$ denotes the current asset value, and n denotes the number of constraint conditions;
the probability distribution normalization condition expression is:

$$\int_0^\infty \gamma(x)dx = 1 \quad ;$$

the input data constraint condition expression is:

$$\int_0^\infty (S_i - x)^+ \gamma(x)dx = C_i \quad ;$$

and

the risk-neutral constraint condition expression is:

$$\int_0^\infty x\,\gamma(x)dx = e^{-\int_0^T r(t)dt} \cdot K \quad ;$$

wherein $C_i$, T, K and r(t) denote the price of a call option, the maturity of the call option, the exercise price of the call option and the interest rate at time t, respectively, and thereby, the risk-neutral probability in regressing economy, which is the time-reversed economy, is determined to calculate the gamma of the option; and
the output step further outputs the gamma of the option.

**15.** The computer calculation processing method according to claim 2, 3, 10, 11 or 12, **characterized in that**:

risk-neutral probability distribution obtained by applying the predetermined risk-neutral probability distribution expression to time-reversed economy is indicated by:

$$\gamma(x) = (\lambda' + \beta' x + \sum_{i=1}^{n} \nu'_i \Theta(S_i - x))^{\frac{1}{\alpha-1}}$$

wherein $\Theta$ denotes a Heaviside function, $\Theta(S_{i-x})$ denotes a payment function of a digital option, $\lambda'$, $\beta'$ and $\nu'_i$ denote the Lagrange undetermined multipliers, $S_i$ denotes the current asset value, and n denotes the number of constraint conditions;
the probability distribution normalization condition expression is:

$$\int_0^\infty \gamma(x)dx = 1 \quad ;$$

the input data constraint condition expression is:

$$\int_0^\infty \Theta(S_i - x)\gamma(x)dx = C_i \quad ;$$

and
the risk-neutral constraint condition expression is

$$\int_0^\infty x\,\gamma(x)dx = e^{-\int_0^T r(t)dt} K \quad ;$$

wherein $C_i$, T, $S_i$ K and r(t) denote the price of the digital option, the maturity of the digital option, the current asset value, the exercise price of the digital option and the interest rate at time t, respectively, and thereby, the risk-neutral probability in regressing economy, which is the time-reversed economy, is determined to calculate the gamma of the digital option; and
the output step further outputs the gamma of the digital option.

**16.** The computer calculation processing method according to claim 13, 14 or 15, **characterized in that**:

the calculated risk-neutral probability $\gamma(x)$ is integrated to calculate a hedge strategy delta; and
the output step further outputs the hedge strategy delta.

17. The computer calculation processing method according to any of claims 2 to 12, **characterized in that**:

a tail distribution variable

$$\mu = \frac{1}{1-\alpha}$$

is determined with the use of the power coefficient; and
the output step further outputs the tail distribution variable.

18. The computer calculation processing method according to any of claims 1 to 17, **characterized in** further comprising:

a terminal transmission step of a user terminal accepting input of setting information including the underlying asset type, desired exercise price and desired maturity of a derivative product desired by a user and transmitting the setting information to the computer via a network;
an information receiving step of the computer receiving market information about the derivative product collected by interface means and the setting information transmitted from the user terminal, as the predetermined information held by the multiple constraint condition expressions as coefficients; and
a terminal receiving step of receiving and outputting probability distribution outputted by the output means via the network, by the user terminal.

19. The computer calculation processing method according to claim 18, **characterized in that** the market information includes the price of the underlying asset and the current interest rate.

20. A program for causing a computer to execute a computer calculation processing method for acquiring risk-neutral probability distribution by a nonparametric method on the basis of multiple constraint condition expressions, by a program of a computer, the method comprising:

a simultaneous equations generation step of reading a predetermined risk-neutral probability distribution expression maximizing the entropy which is stored in storage means in advance, from the storage means, substituting the predetermined risk-neutral probability distribution expression into the multiple condition expressions to generate simultaneous equations including Lagrange undetermined multipliers, and storing the simultaneous equations in the storage means;
a Lagrange multipliers calculation step of reading the generated simultaneous equations from the storage means, determining the solution of the simultaneous equations by numeric calculation means, deciding each of the Lagrange undetermined multipliers, and storing each of the Lagrange undetermined multipliers in the storage section as a Lagrange multiplier; and
an output step of generating probability distribution by the calculation means on the basis of the predetermined risk-neutral probability distribution expression decided by the Lagrange multipliers read from the storage section and outputting the probability distribution by output means.

21. A computer apparatus for acquiring risk-neutral probability distribution by a nonparametric method on the basis of multiple constraint condition expressions having predetermined information as coefficients, the computer apparatus being **characterized in** comprising:

information input means for inputting the predetermined information;
simultaneous equations generation means for reading a predetermined risk-neutral probability distribution expression maximizing the entropy which is stored in storage means in advance, from the storage means, substituting the predetermined risk-neutral probability distribution expression into the multiple constraint condition expressions to generate simultaneous equations including Lagrange undetermined multipliers, and storing the simultaneous equations in the storage means;
Lagrange multipliers calculation means for reading the generated simultaneous equations from the storage means, determining the solution of the simultaneous equations by numeric calculation means, deciding each of the Lagrange undetermined multipliers, and storing each of the Lagrange undetermined multipliers in the storage section as a Lagrange multiplier; and
output means for generating probability distribution by the calculation means on the basis of the predetermined risk-neutral probability distribution expression decided by the Lagrange multipliers read from the storage section and outputting the probability distribution.

22. The computer apparatus according to claim 21, **characterized in that** the output means outputs the generated probability distribution and probability distribution obtained by a parametric method in a form enabling comparison between the probability distributions.

23. A risk evaluation system **characterized in** comprising:

a client terminal comprising input means for receiving input of predetermined information, transmission means for transmitting a calculation processing request including the received predetermined information via a network, and output means for receiving and outputting a result of processing performed in response to the calculation processing request; and

a calculation processing server comprising request receiving means for receiving the calculation processing request transmitted from the client terminal via the network, storage means for storing data used in the calculation processing, calculation processing execution means for executing a computer calculation processing method for acquiring risk-neutral probability distribution by a nonparametric method on the basis of multiple constraint condition expressions having the received predetermined information as coefficients, by a program of a computer, and result transmission means for transmitting a result obtained by the calculation processing to the client terminal via the network.

24. The risk evaluation system according to claim 23, **characterized in that** the calculation processing execution means executes a calculation processing method comprising:

a simultaneous equations generation step of reading a predetermined risk-neutral probability distribution expression maximizing the entropy which is stored in storage means in advance, from the storage means, substituting the predetermined risk-neutral probability distribution expression into the multiple constraint condition expressions to generate simultaneous equations including Lagrange undetermined multipliers, and storing the simultaneous equations in the storage means;

a Lagrange multipliers calculation step of reading the generated simultaneous equations from the storage means, determining the solution of the simultaneous equations by numeric calculation means, deciding each of the Lagrange undetermined multipliers, and storing each of the Lagrange undetermined multipliers in the storage section as a Lagrange multiplier; and

an output step of generating probability distribution by the calculation means on the basis of the predetermined risk-neutral probability distribution expression decided by the Lagrange multipliers read from the storage section and outputting the probability distribution by output means.

25. A computer calculation processing method for acquiring the gamma of a derivative by a program of a computer, the method being **characterized in** comprising:

a simultaneous equations generation step of reading a predetermined risk-neutral probability distribution expression maximizing the entropy which is stored in storage means in advance, from the storage means, substituting the predetermined risk-neutral probability distribution expression into multiple constraint condition expressions having predetermined information as coefficients to generate simultaneous equations including Lagrange undetermined multipliers, and storing the simultaneous equations in the storage means;

a Lagrange multipliers calculation step of reading the generated simultaneous equations from the storage means, determining the solution of the simultaneous equations by numeric calculation means, deciding each of the Lagrange undetermined multipliers, and storing each of the Lagrange undetermined multipliers in the storage section as a Lagrange multiplier; and

an acquisition step of generating probability distribution by the calculation means on the basis of the predetermined risk-neutral probability distribution expression decided by the Lagrange multipliers read from the storage section and applying the generated risk-neutral probability distribution expression to time-reversed economy to acquire the gamma of the option by acquisition means.

26. A computer calculation processing method for acquiring the gamma of an option by a program of a computer, the method being **characterized in** comprising:

a simultaneous equations generation step of reading a predetermined risk-neutral probability distribution expression maximizing the entropy which is stored in storage means in advance, from the storage means, substituting the predetermined risk-neutral probability distribution expression into multiple constraint condition expressions having predetermined information as coefficients to generate simultaneous equations including Lagrange undetermined multipliers, and storing the simultaneous equations in the storage means;

a Lagrange multipliers calculation step of reading the generated simultaneous equations from the storage means, determining the solution of the simultaneous equations by numeric calculation means, deciding each of the Lagrange undetermined multipliers, and storing each of the Lagrange undetermined multipliers in the storage section as a Lagrange multiplier; and

an acquisition step of generating probability distribution by the calculation means on the basis of the predetermined risk-neutral probability distribution expression decided by the Lagrange multipliers read from the storage section and applying the generated risk-neutral probability distribution expression to time-reversed economy to acquire the gamma of the option by acquisition means.

**27.** A computer calculation processing method for acquiring the gamma of a digital option by a program of a computer, the method being **characterized in** comprising:

a simultaneous equations generation step of reading a predetermined risk-neutral probability distribution expression maximizing the entropy which is stored in storage means in advance, from the storage means, substituting the predetermined risk-neutral probability distribution expression into multiple constraint condition expressions having predetermined information as coefficients to generate simultaneous equations including Lagrange undetermined multipliers, and storing the simultaneous equations in the storage means;

a Lagrange multipliers calculation step of reading the generated simultaneous equations from the storage means, determining the solution of the simultaneous equations by numeric calculation means, deciding each of the Lagrange undetermined multipliers, and storing each of the Lagrange undetermined multipliers in the storage section as a Lagrange multiplier; and

an acquisition step of generating probability distribution by the calculation means on the basis of the predetermined risk-neutral probability distribution expression decided by the Lagrange multipliers read from the storage section and applying the generated risk-neutral probability distribution expression to time-reversed economy to acquire the gamma of the option by acquisition means.

(1. KIND OF UNDERLYING ASSET
2. DESIRED EXERCISE PRICE
3. DESIRED MATURITY)

**INPUT DEVICE** — 101

102

**MARKET**

(4. PRICE OF UNDERLYING ASSET
5. MATURITY OF HIGH-LIQUIDITY OPTION
6. EXERCISE PRICE OF HIGH-LIQUIDITY OPTION
7. PRICE OF HIGH-LIQUIDITY OPTION
8. CURRENT INTEREST RATE)

(1. KIND OF UNDERLYING ASSET)

103

**CALCULATOR**

104

**INTERFACE**

(4. PRICE OF UNDERLYING ASSET
5. MATURITY OF HIGH-LIQUIDITY OPTION
6. EXERCISE PRICE OF HIGH-LIQUIDITY OPTION
7. PRICE OF HIGH-LIQUIDITY OPTION
8. CURRENT INTEREST RATE)

105

(2. DESIRED EXERCISE PRICE
3. DESIRED MATURITY
9. CALIBRATED RISK-NEUTRAL PROBABILITY OF UNDERLYING ASSET PRICE AT MATURITY
10. OPTION PRICE DETERMINED BY RISK-NEUTRAL PROBABILITY
11. CALIBRATED GAMMA OF OPTION
12. HEDGE STRATEGY DELTA
13. IMPLIED TAIL DISTRIBUTION VARIABLE $\mu$)

**FIG.1**

**DISPLAY DEVICE** — 106

$$\boxed{\text{START}}$$

~S201

INPUTS INPUT DATA AND MARKET DATA

~S202

SUBSTITUTES INPUTTED DATA INTO CONSTRAINT
CONDITION EXPRESSIONS

~S203

DERIVES SIMULTANEOUS NONLINEAR EQUATIONS BY
SUBSTITUTING RISK-NEUTRAL PROBABILITY
DISTRIBUTION P(X) OBTAINED BY SUBSTITUTING
PREDETERMINED VALUE FOR POWER COEFFICIENT $\alpha$
AND USING RENNIE'S MAXIMUM ENTROPY METHOD INTO
EACH CONSTRAINT CONDITION EXPRESSION

~S204

PERFORMS NUMERICAL CALCULATION OF SIMULTANEOUS
EQUATIONS TO DETERMINE LAGRANGE UNDETERMINED
MULTIPLIERS

~S205

GENERATES PROBABILITY DISTRIBUTION FOR
PREDETERMINED $\alpha$ OF OBTAINED RISK-NEUTRAL
PROBABILITY DISTRIBUTION P(X)

~S206

IS SMOOTHNESS DEGREE OF
OBTAINED PROBABILITY DISTRIBUTION
THE MAXIMUM?    NO

YES

~S207

DISPLAYS PROBABILITY DISTRIBUTION WITH THE
MAXIMUM SMOOTHNESS

$$\boxed{\text{END}}$$

# FIG.2

FIG.3

FIG.4

EP 1 903 493 A1

**FIG.5**

FIG.6

**FIG.7**

**FIG.8**

Figure contents:

- ×××FINANCE
- OPTION MARKET
- MARKET PRICE BASED ON MODEL
- MARKET PRICE OF HIGH-LIQUIDITY PRODUCT
- ALGORITHM CALCULATION BY C++ OR MATHEMATICA (MAXIMUM ENTROPY METHOD FOR DIRECTLY CALIBRATING OPTION PRICE WITHOUT DEPENDING ON MODEL)
- DETERMINATION OF OPTION PRICE WHICH DOES NOT GIVE ARBITRAGE OPPORTUNITY BENCHMARK
- INTERNET
- STOCK OPTION DEALER (HEDGE FUND, INVESTMENT BANK, EXCHANGE)
- COMMISSION PRICE STRATEGY (ARBITRAGE)
- INSTITUTIONAL INVESTORS GENERAL INVESTORS

EP 1 903 493 A1

**FIG.9**

SELECT STOCK NAME YOU DESIRE OR YOU ARE INTERESTED IN

SELECT DESIRED MATURITY

SELECT EXERCISE PRICE OF STOCK CERTIFICATE ABOUT WHICH YOU WANT TO KNOW OPTION PRICE

TO BE OUTPUTTED HERE

PRICE OF RIGHT TO BUY ONE STOCK OF ABC AT 182,000 AFTER 1 YEAR IS ¥14,000

ABC     ⊙CALL (BUY)/○ (SELL)     AFTER 1 YEAR     182,000     ¥ 14,000.-

SELECT STOCK NAME FOR WHICH YOU WANT TO MAKE TRANSACTION (SET "OTHER" IF THERE IS NOT SUCH STOCK NAME).

TOPIX ▷

SELECT BETWEEN CALL (BUY)/PUT (SELL)

○CALL (BUY)/○ PUT (SELL)

MATURITY OF OPTION
(WHEN DO YOU WANT TO EXERCISE OPTION?)

AFTER 3 MONTHS ▷

DESIRED EXERCISE PRICE (¥)
(HOW MUCH DO YOU WANT TO SELL/BUY STOCK CERTIFICATE?)

OPTION PRICE
(USE THE PRICE AS CRITERION FOR YOUR TRANSACTION)

¥---.-

SELECT STOCK NAME FOR WHICH YOU WANT TO MAKE TRANSACTION (SET "OTHER" IF THERE IS NOT SUCH STOCK NAME).

TOPIX ▷
×××
ABC
△△△△
××××
△△△△△△△
×××××××××××
△△△△
××××
△△
×××
△△△

SELECT BETWEEN CALL (BUY)/PUT (SELL)

MATURITY OF OPTION
(WHEN DO YOU WANT TO EXERCISE OPTION?)

DESIRED EXERCISE PRICE (¥)
(HOW MUCH DO YOU WANT TO SELL/BUY STOCK CERTIFICATE?)

OPTION PRICE
(USE THE PRICE AS CRITERION FOR YOUR TRANSACTION)

¥---.-

```
              ┌──────────────┐
              │    START     │
              └──────┬───────┘
                     │  ◄─────────────────────┐
                     ▼        ~S1001           │
    ┌─────────────────────────────────────┐   │
    │   OUTPUTS SCREEN PROMPTING DATA INPUT │   │
    └────────────────┬────────────────────┘   │
                     ▼        ~S1002       YES │
         ◇─────────────────────────────────◇──┘
          HAS USER INPUT BEEN PERFORMED?
         ◇─────────────────────────────────◇
                     │ NO
                     ▼        ~S1003
    ┌─────────────────────────────────────┐
    │   TRANSMITS INPUTTED DATA TO SERVER  │
    └────────────────┬────────────────────┘
                     ▼        ~S1004
    ┌─────────────────────────────────────┐
    │  DISPLAYS EVALUATION RESULT OUTPUTTED FROM │
    │        SERVER ON SCREEN              │
    └────────────────┬────────────────────┘
                     ▼
              ┌──────────────┐
              │     END      │
              └──────────────┘
```

# FIG.10

<div align="center">

**INTERNATIONAL SEARCH REPORT**

</div>

| International application No. |
|---|
| PCT/JP2006/312017 |

| A. CLASSIFICATION OF SUBJECT MATTER |
|---|
| *G06Q40/00*(2006.01)i, *G06Q10/00*(2006.01)i, *G06Q90/00*(2006.01)i |

According to International Patent Classification (IPC) or to both national classification and IPC

| B. FIELDS SEARCHED |
|---|

Minimum documentation searched (classification system followed by classification symbols)
G06Q40/00, G06Q10/00, G06Q90/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | DORJE C. BRODY et al., "OPTION PRICE CALIBRATION FROM RENYI ENTROPY", [online], 21 November, 2004 (21.11.04) update, [Retrieval date 08 August, 2006 (08.08.06)], Internet <URL: http://www.mth.kcl.ac.uk/~ibuckley/Papers/ Brody_Buckley_Constantinou_2004_Option_Price_ Calibration_Renyi_Entropy.pdf> | 1-27 |
| A | Cambell John Y. et al., "Finance no Tame no Keiryo Bunseki", Kyoritsu Shuppan Co., Ltd., 25 September, 2003 (25.09.03), first edition, pages 370 to 371 | 13-16,25-27 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 August, 2006 (10.08.06) | 22 August, 2006 (22.08.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/312017 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2002-56185 A  (Kabushiki Kaisha Daiichi Kangyo Ginko), 20 February, 2002 (20.02.02), Full text; Figs. 1 to 55 (Family: none) | 18,19 |

Form PCT/ISA/210 (continuation of second sheet) (April 2005)

# EP 1 903 493 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BLACK ; SCHOLES.** *Journal of Political Economy,* 1973, vol. 81, 637-659
- **W. SCHOUTENS ; E. SIMONS ; J. TISTAERT.** A Perfect Calibrations! Now What. *Technical Report,* 2003
- **P. W. BUCHEN ; M. KELLY.** The maximum entropy distribution of an asset inferred from option prices. *Journal of Financial and Quantitative Analysis,* 1996, vol. 31, 143-159
- **XAVIER GABAIX ; PARAMESWARAN GOPIKRISHNAN ; VASILIKI PLEROU ; H. EUGENE STANLEY.** A theory of power-law distributions in financial market fluctuations. *Nature,* 2003